# EUROPEAN PATENT APPLICATION

(11) **EP 4 844 480 A1**
(43) Date of publication of application: **25.11.2026**
(21) Application number: 26176228.0
(22) Date of filing: 04.05.2026
(51) Int. Cl.: G02F 1/35

(54) **APPARATUS FOR GENERATING QUANTUM ENTANGLED PHOTON PAIRS USING PHOTONICS STRUCTURE AND METHOD FOR GENERATING QUANTUM ENTANGLED PHOTON PAIRS USING THE SAME**

(30) Priority: 20.05.2025 KR 20250065163
(71) Applicant: SDT Inc., Seoul 06211 (KR)
(72) Inventor: YUNE, Jiwon, Gwacheon (KR)
(74) Representative: Manasse, Uwe

(57) **Abstract**

According to the present invention, an apparatus for generating quantum entangled photon pairs can be provided, comprising an atomic vapor cell filled with atomic vapor, a photonics structure surrounding the atomic vapor cell, and at least two light sources configured to irradiate light toward the atomic vapor cell from directions facing each other, wherein incident light from each light source is received through the photonics structure, and a photon pair composed of a signal photon and an idler photon generated from the atomic vapor cell is emitted through the photonics structure.

## Description

### Technical Field

The present invention relates to an apparatus for generating quantum entangled photon pairs using a photonics structure and a method for generating quantum entangled photon pairs using the same. More specifically, the present invention relates to a method of implementing a chip-scale quantum entangled photon pair generation apparatus by utilizing the structure and shape of a photonics structure surrounding an atomic vapor cell.

### Background Art

Implementing the generation of quantum entangled photon pairs is an important technology used in quantum communication, quantum cryptography communication, and quantum information processing. The generation of quantum entangled photon pairs enables applications to nodes in quantum information processing and quantum information networks that include quantum memory when photons are capable of interacting with atoms.

In particular, the technology of generating quantum entangled photon pairs using an atomic vapor cell is implemented through spontaneous four-wave mixing (SFWM) and plays an important role in the fields of quantum optics and quantum information science. Atomic vapor cells offer the advantages of providing tunability and experimental flexibility compared to conventional spontaneous parametric downconversion (SPDC)-based crystal systems, as well as high compatibility with optical fiber communication wavelength bands. Furthermore, photon pairs generated in atomic vapor cells have low noise and maintain their entangled state well due to the narrow linewidth of the atoms, resulting in the advantages of excellent entanglement purity and correlation. In addition to these, they provide advantages such as wavelength tunability and integration with quantum memories, thereby playing a crucial role in accelerating the commercialization of quantum technology.

However, conventional atomic vapor cells have mainly been implemented based on bulk optics technology. This is because the atomic vapor cell itself acts as a relatively large medium containing hot atomic gas, and the surrounding optical system is composed of macro-scale components such as traditional lenses, mirrors, and beam splitters. However, in the case of bulk optics, the volume is large, and the alignment can be distorted due to sensitivity to external vibrations or temperature changes. In particular, integration with electronic circuits or miniaturization is difficult, making it impossible to implement on a chip scale, thereby limiting practical applications.

Accordingly, in order to implement quantum entangled photon pairs using a chip-scale atomic vapor cell, a new method and apparatus utilizing a photonics structure are required.

### [Prior Art Documents]

### [Patent Documents]

(Patent Document 0001) Republic of Korea Registered Patent No. 10-2704376

### Detailed Description of the Invention

### Technical Problem

An object of the present invention is to provide a chip-scale quantum entangled photon pair generation apparatus using a photonics structure and a design structure thereof.

Another object of the present invention is to minimize the use of conventional bulk optics components and provide a chip-scale quantum entangled photon pair generation apparatus using a photonics structure.

Another object of the present invention is to provide a quantum entangled photon pair generation apparatus capable of reducing the noise effect of scattered light through spatial separation using beam displacement when incident light from each light source is received through a photonics structure and a photon pair generated from an atomic vapor cell is emitted through the photonics structure.

Another object of the present invention is to provide a photonics structure capable of efficiently focusing incident light from each light source by utilizing a photonics structure and an optical waveguide structure that can focus incident light in an area where the incident light is received.

The technical problems to be solved by the present invention are not limited to those mentioned above, and other unmentioned technical problems will be clearly understood by those skilled in the art from the following description.

### Technical Solution

According to an embodiment of the present invention, an apparatus for generating quantum entangled photon pairs may be provided, comprising: an atomic vapor cell filled with atomic vapor; a photonics structure surrounding the atomic vapor cell; at least two light sources configured to irradiate light toward the atomic vapor cell from directions facing each other; wherein incident light from each light source is received through the photonics structure, and a photon pair composed of a signal photon and an idler photon generated from the atomic vapor cell is emitted through the photonics structure.

Furthermore, the photonics structure may be composed of a semiconductor material or glass.

Furthermore, the photonics structure may have a polygonal or circular shape.

Furthermore, the photonics structure may be configured to cause beam displacement of the photon pair depending on an angle formed with the photonics structure when the photon pair is emitted.

Furthermore, the photonics structure may be configured such that its inner surface and outer surface are not parallel in an area where the photon pair is emitted, such that the thickness of the photonics structure is not uniform.

Furthermore, the photonics structure may include a focusing structure in an area where the incident light is received to focus the incident light.

Furthermore, the focusing structure may have a curved shape.

Furthermore, the focusing structure may have a Fresnel lens shape.

Furthermore, the focusing structure may be a lens structure coupled to the surface of the photonics structure.

Furthermore, the apparatus may further include an optical waveguide configured to guide the incident light, wherein light emitted from the optical waveguide is received through the photonics structure.

### Effects of Invention

According to the present invention, a chip-scale quantum entangled photon pair generation apparatus using a photonics structure and a design structure thereof can be provided.

Also, according to the present invention, the use of conventional bulk optics components can be minimized, and a chip-scale quantum entangled photon pair generation apparatus can be implemented using a photonics structure.

Furthermore, the present invention aims to provide a quantum entangled photon pair generation apparatus capable of reducing the noise effect of scattered light through spatial separation using beam displacement when incident light from each light source is received through a photonics structure and a photon pair generated from an atomic vapor cell is emitted through the photonics structure.

Furthermore, the present invention aims to implement a photonics structure capable of efficiently focusing incident light from each light source by utilizing a photonics structure and an optical waveguide structure that can focus incident light in an area where the incident light is received.

The effects of the present invention are not limited to those mentioned above, and other effects not mentioned will be clearly understood by those skilled in the art from the description below.
According to the present invention, a technology can be provided to select a suitable QPU to execute a given quantum algorithm.

### Brief Description of Drawings

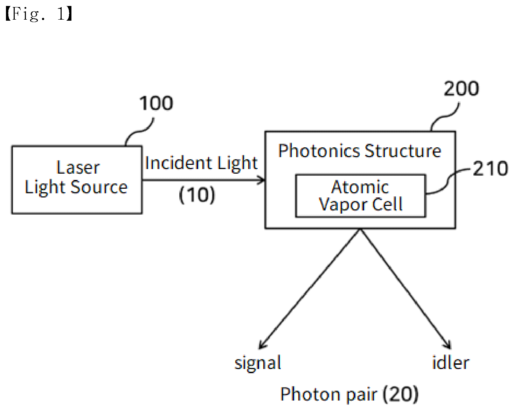

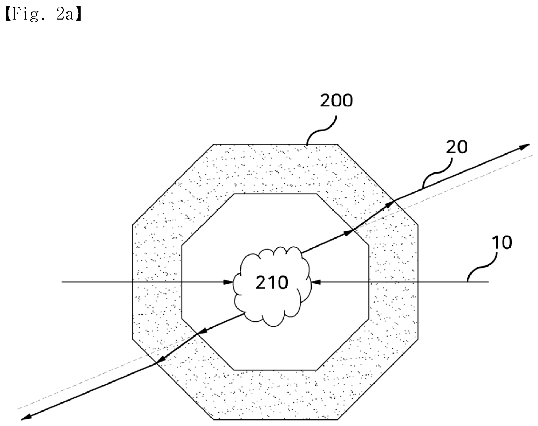

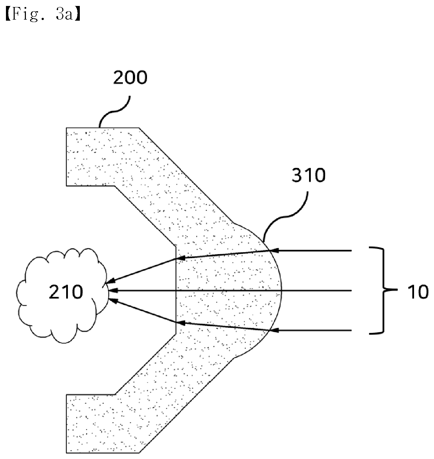

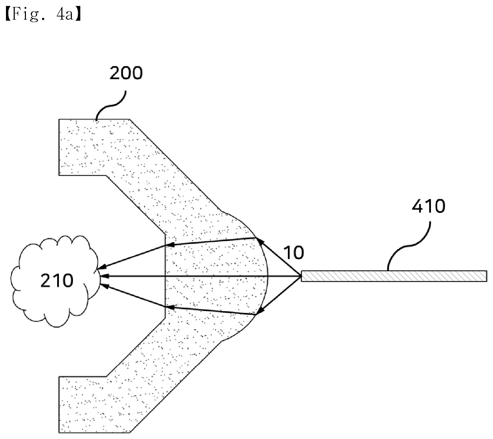

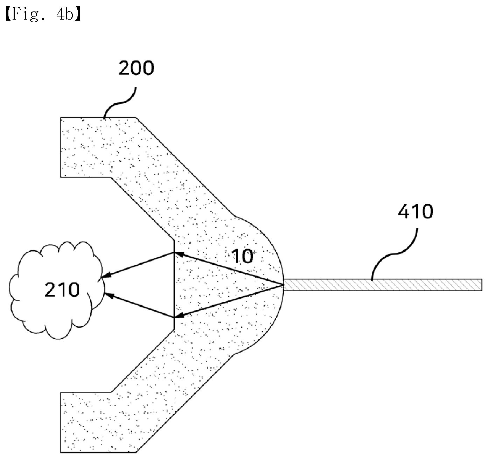

FIG. 1 is a conceptual diagram for explaining the structure of a quantum entangled photon pair generation apparatus using a photonics structure according to an embodiment of the present invention. FIGS. 2a to 2c are exemplary diagrams illustrating a structure generating a beam displacement of a photon pair using a photonics structure according to an embodiment of the present invention. FIGS. 3a to 3c are exemplary diagrams illustrating a focusing structure capable of focusing incident light using a photonics structure according to an embodiment of the present invention. FIGS. 4a and 4b are exemplary diagrams illustrating a coupling structure between an optical waveguide configured to guide incident light and a photonics structure according to an embodiment of the present invention.

### Detailed Description for Implementing the Invention

Hereinafter, the present invention will be described in detail with reference to the accompanying drawings so that those skilled in the art to which the present invention pertains can easily carry out the invention. However, the present invention may be implemented in various different forms and is not limited to the embodiments described herein.

The terms used in this specification are for the purpose of describing embodiments and are not intended to limit the present invention. In this specification, the singular form also includes the plural form unless specifically stated otherwise in the phrase.

As used herein, "comprises" and/or "comprising" does not exclude the presence or addition of one or more other components, steps, operations, and/or elements in addition to the stated components, steps, operations, and/or elements.

In addition, in describing the present invention, if it is determined that a detailed description of related known technologies may obscure the gist of the present invention, the detailed description thereof will be omitted.

Hereinafter, embodiments according to the present invention will be described in detail with reference to the accompanying drawings. The configuration of the present invention and the operational effects accordingly will be clearly understood through the detailed description below.

FIG. 1 is a conceptual diagram for explaining the structure of a quantum entangled photon pair generation apparatus using a photonics structure according to an embodiment of the present invention.

The laser light source (100) is configured to emit laser light that satisfies optical conditions for generating quantum entangled photon pairs from the atomic vapor cell (210), wherein the optical conditions can be precisely controlled in relation to energy levels of atoms, nonlinear interaction, phase matching conditions, and the like. In addition, the laser light source (100) may be composed of at least two or more light sources configured to irradiate light toward the atomic vapor cell (210) from directions facing each other, and for example, pump photons may be used as the incident light (10) as a strong laser beam.

Light generated from the laser light source (100) is received through a photonics structure (200) surrounding the atomic vapor cell (210) as incident light (10), and a photon pair (20) composed of a signal photon and an idler photon generated from the atomic vapor cell (210) may be emitted through the photonics structure (200). Furthermore, the incident light (10) beams generated from the laser light source (100) usually have different wavelengths or polarizations and are adjusted to interact with specific energy levels of the atoms. The nonlinear interaction can be maximized by tuning the pump laser near the resonant frequency of the atoms.

Here, the atomic vapor cell (210) is a cell filled with an alkali metal atom such as Rubidium (Rb) or Cesium (Cs) in a hot gas state, and these atoms have well-defined energy levels capable of interacting with light of a specific wavelength. At this time, when two strong laser beams, such as pump photons, are incident on the atomic vapor cell (210) as incident light (10), four photons interact through a nonlinear optical process called four-wave mixing (SFWM) to generate new photons satisfying the laws of conservation of energy and momentum. In this way, two pump photons interact with the atomic vapor to generate two new photons, i.e., a signal photon and an idler photon. At this time, the generated signal photon and idler photon are a photon pair (20) in an entangled state, satisfying energy and momentum conservation, and phase matching is fulfilled within the atomic vapor cell, allowing the signal photon and idler photon to be emitted in different directions.

Furthermore, the photonics structure (200) can be configured to surround the atomic vapor cell and can be manufactured to enable miniaturization and integration without using bulk optical components such as lenses and mirrors, which pose size constraints, by implementing it on a chip scale within millimeters (mm) using a semiconductor process without bulk optics.

Here, the photonics structure (200) may be composed of a semiconductor material such as Si, SiNx, or glass. The frequency band of the incident light (10) can be set to a transmissive range depending on the material of the photonics structure (200). In addition, the photonics structure (200) can have a polygonal or circular shape, and can be configured to cause beam displacement of the photon pair (20) depending on the angle formed with the photonics structure (200) when the photon pair (20) is emitted. For example, the photonics structure (200) can be configured to spatially separate the propagation path of the photon pair (20) from the path of the incident light (10) or the path of scattered light through a change in the shape and/or thickness of the area where the photon pair (20) is emitted.

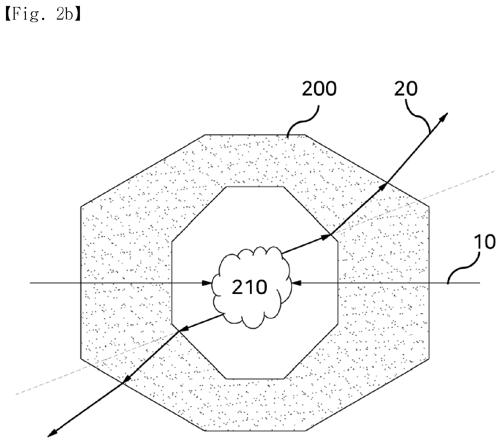

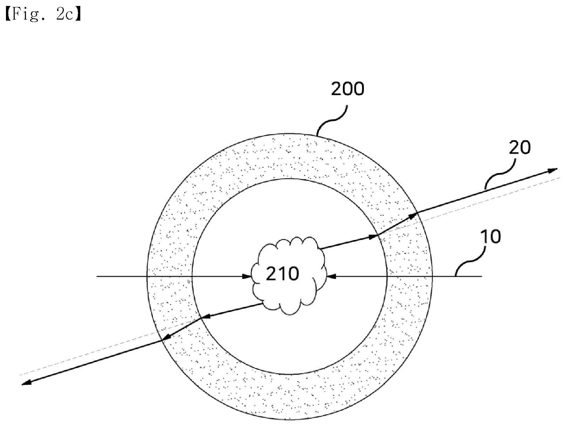

At this time, by designing the inner surface and outer surface to be non-parallel in the area where the photon pair (20) is emitted, the photonics structure can be configured such that its thickness is not uniform, allowing the photon pair (20) to be spatially separated by a greater distance and angle. In this way, when the photon pair generated from the atomic vapor cell is emitted through the photonics structure (200), the noise effect of scattered light can be reduced through spatial separation using beam displacement. A more specific configuration will be described later with reference to FIG. 2.

Furthermore, a periodic nanostructure (e.g., photonic crystal, metasurface, etc.) may be formed on the surface (i.e., receiving surface of incident light, emitting surface of photon pairs) or inside of the photonics structure (200).

This enables more precise and efficient focusing or collimation of light. Such a nanostructure can impart a filter role to the structure itself, reflecting light of a specific wavelength and transmitting the wavelength of the desired photon pair. This is highly effective in removing scattered light.

In one embodiment, a Multilayer Dielectric Coating may be applied to the surface (incident light receiving surface, photon pair emitting surface) or inside of the photonics structure (200) to produce the following effects. First, an anti-reflection effect minimizes reflection at specific wavelengths to increase transmittance, aiding in the efficient transfer of incident light and lossless emission of photon pairs. Second, a high-reflection effect allows specific surfaces to perform a mirror role (e.g., recycling or blocking pump light) by reflecting unwanted light. Third, a band-pass/stop filter effect provides the effect of transmitting/blocking only specific wavelength bands.

In another embodiment, an Active Tuning Unit capable of dynamically changing optical characteristics may be further included in a part or the entirety of the photonics structure (200). Through this, it is possible to correct manufacturing errors, finely adjust the operating wavelength, and achieve dynamic optimization of phase-matching conditions. First, using the thermo-optic effect, a micro-heater can be integrated to adjust the refractive index via local temperature changes. Second, using the electro-optic effect, a specific material (e.g., LiNbO3 thin film) can be used, and electrodes formed to adjust the refractive index with voltage. Third, using MEMS (Micro-Electro-Mechanical Systems), micro-mechanical structures can be moved to finely adjust optical paths or tune resonance conditions.

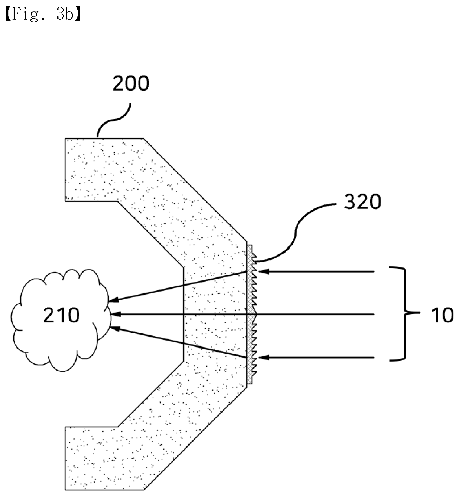

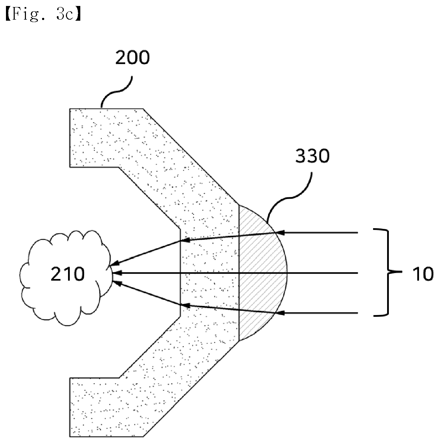

Furthermore, the photonics structure (200) may include a focusing structure or a separate structure to focus the incident light (10) in an area where the incident light (10) is received. For example, the photonics structure (200) may have a curved shape in the area where the incident light (10) is received, a Fresnel lens shape, or a separate lens structure coupled to the surface. A more specific configuration for the focusing structure will be described later with reference to FIG. 3.

In addition, the photonics structure (200) may further include an optical waveguide configured to guide the incident light (10), and light emitted from the optical waveguide may be received through the photonics structure (200). Moreover, it may have a form in which, for example, the optical waveguide and the photonics structure

(200) are coupled. Here, the optical waveguide confines incident light to reduce loss, enables fast and efficient signal processing due to miniaturization, and can be composed of various materials depending on requirements such as wavelength of light and nonlinearity, for example, semiconductor materials like silicon, glass materials, or other special materials. A more specific configuration of the optical waveguide will be described later with reference to FIG. 4.

FIGS. 2a to 2c are exemplary diagrams for explaining a structure generating beam displacement of a photon pair using a photonics structure according to an embodiment of the present invention.

Referring to FIG. 2a, although the photonics structure (200) is shown as an octagon among polygonal shapes, it may have other polygonal shapes. The incident light (10) may be received from opposite directions facing toward the atomic vapor cell (210). At this time, since the incident light (10) enters perpendicular to one surface of the photonics structure (200), beam displacement does not occur. However, because the photon pair (20) generated from the atomic vapor cell (210) forms a certain angle rather than being perpendicular to a surface when emitted through the photonics structure (200), beam displacement can occur from the dashed line representing the emission angle prior to meeting the photonics structure (200). Here, beam displacement refers to the phenomenon of light shifting laterally from its original path when passing through an optical element-in this case, the photonics structure (200). FIG. 2a shows a case where the emission path of the photon pair (20) shifts in position while maintaining its direction. In this way, when the photon pair (20) generated from the atomic vapor cell (210) is emitted through the photonics structure (200), the noise effect of scattered light can be reduced through spatial separation utilizing the generated beam displacement. Furthermore, although the angle between the receiving direction of the incident light (10) and the emitting direction of the photon pair (20) may actually be a small angle of less than 5 degrees, it is depicted at a larger angle in the drawing to facilitate understanding of beam displacement.

Referring to FIG. 2b, the photonics structure (200) is designed such that its inner surface and outer surface are not parallel in the area where the photon pair (20) is emitted, resulting in a non-uniform thickness. In this case, the photon pair (20) can be implemented to achieve greater spatial separation in distance and angle compared to the case where the photonics structure (200) has a uniform thickness in FIG. 2a. That is, while FIG. 2a shows a case where only the position is shifted while maintaining the direction of the emission path of the photon pair (20), according to the structure of FIG. 2b, both the position and angle are altered from the dashed line representing the original emission angle prior to meeting the photonics structure (200). Therefore, the noise effect of scattered light can be reduced more effectively through greater spatial separation within a narrow space.

Referring to FIG. 2c, a case where the photonics structure (200) has a circular shape rather than a polygonal shape is illustrated. As in the case of FIG. 2a, spatial separation can be implemented using beam displacement generated when the photon pair (20) generated from the atomic vapor cell (210) is emitted through the photonics structure (200). When the thickness of the photonics structure (200) is adjusted to be non-uniform, as in FIG. 2b, both the position and angle are altered from the dashed line representing the original emission angle, allowing for greater spatial separation within a narrow space.

FIGS. 3a to 3c are exemplary diagrams illustrating a focusing structure capable of focusing incident light using a photonics structure according to an embodiment of the present invention.

When the incident light (10) received perpendicularly toward the atomic vapor cell (210) through the photonics structure (200) is focused and gathered, energy density is improved, thereby allowing various quantum optical gains to be achieved. For this purpose, the photonics structure (200) may include a focusing structure or a separate structure capable of focusing the incident light (10) in the receiving area where the incident light (10) is received perpendicularly.

First, referring to FIG. 3a, for convenience, only the right half of the photonics structure (200) is illustrated. By configuring the shape of the receiving area in the photonics structure (200) where the incident light (10) is received as a curved structure (310) having a curved surface, the effect of focusing the incident light (10) onto the atomic vapor cell (210) can be enhanced.

Also, in the case of FIG. 3b, in order to reduce the size of the curved shape of FIG. 3a, the shape of the receiving area in the photonics structure (200) where the incident light (10) is received can be configured in the form of a Fresnel structure (320) having a Fresnel lens shape.

Also, in the case of FIG. 3c, it can be implemented in a manner of coupling a separate lens structure (330) to the surface of the receiving area in the photonics structure (200) where the incident light (10) is received. Here, the lens structure (330) can be manufactured by processing glass or other optically transparent materials, and can be coupled to the photonics structure (200) using, for example, ultraviolet (UV) adhesive.

FIGS. 4a and 4b are exemplary diagrams illustrating a coupling structure of an optical waveguide configured to guide incident light and a photonics structure according to an embodiment of the present invention.

First, referring to FIG. 4a, the photonics structure (200) may further include an optical waveguide (410) configured to guide the incident light (10) generated from the laser light source (100), and light emitted from the optical waveguide (410) may be received through the photonics structure (200). Here, the optical waveguide (410) confines the incident light to reduce loss, enables fast and efficient signal processing due to miniaturization, and allows control over the divergence angle of the incident light by processing the end of the optical waveguide (410).

Next, referring to FIG. 4b, it shows a form in which the optical waveguide (410) and the photonics structure (200) are coupled without any intervening space, wherein the incident light (10) generated from the laser light source (100) is directly received by the photonics structure (200) through the optical waveguide (410).

In this way, when the optical waveguide (410) is used together with the photonics structure (200), the spatial mode of the photon can be precisely matched with the mode of the photonics structure to provide higher Spatial Mode Matching, thereby improving coupling efficiency. In addition to this, linking the photonics structure (200) using the optical waveguide (410) to inject photons provides advantageous effects for coupling in terms of high intensity density, phase matching, noise reduction, integration, and scalability, thereby improving the efficiency and quality of quantum entangled photon pair generation.

The embodiments disclosed in the specification of the present invention are merely illustrative, and the present invention is not limited thereto. The scope of the present invention should be interpreted by the claims below, and all technologies within the equivalent scope should be interpreted as being included in the scope of the present invention.

### [Description of Reference Numerals]

- 100:: Laser light source
- 200:: Photonics structure
- 210:: Atomic vapor cell

## Claims

1. An apparatus for generating quantum entangled photon pairs, comprising:
an atomic vapor cell filled with atomic vapor;
a photonics structure surrounding the atomic vapor cell;
at least two light sources configured to irradiate light toward the atomic vapor cell from directions facing each other;
wherein incident light from each light source is received through the photonics structure, and a photon pair composed of a signal photon and an idler photon generated from the atomic vapor cell is emitted through the photonics structure.
wherein the incident light is perpendicularly incident on one surface of the photonics structure, and
wherein the photonics structure is configured to cause beam displacement of the photon pair depending on an angle formed with the photonics structure when the photon pair is emitted.

2. The apparatus for generating quantum entangled photon pairs according to claim 1, wherein the photonics structure is composed of a semiconductor material or glass.

3. The apparatus for generating quantum entangled photon pairs according to claim 1, wherein the photonics structure has a polygonal or circular shape.

4. The apparatus for generating quantum entangled photon pairs according to claim 1, wherein the photonics structure is configured such that its inner surface and outer surface are not parallel in an area where the photon pair is emitted, such that a thickness of the photonics structure is not uniform.

5. The apparatus for generating quantum entangled photon pairs according to claim 1, wherein the photonics structure includes a focusing structure in an area where the incident light is received to focus the incident light.

6. The apparatus for generating quantum entangled photon pairs according to claim 5, wherein the focusing structure has a curved shape.

7. The apparatus for generating quantum entangled photon pairs according to claim 5, wherein the focusing structure has a Fresnel lens shape.

8. The apparatus for generating quantum entangled photon pairs according to claim 5, wherein the focusing structure is a lens structure coupled to a surface of the photonics structure.

9. The apparatus for generating quantum entangled photon pairs according to claim 1, further comprising an optical waveguide configured to guide the incident light, wherein light emitted from the optical waveguide is received through the photonics structure.

10. The apparatus for generating quantum entangled photon pairs according to claim 9, wherein the optical waveguide and the photonics structure have a coupled form.
